# EUROPÄISCHE PATENTSCHRIFT

(11) **EP 1 142 642 B1**
(45) Veröffentlichungstag und Bekanntmachung des Hinweises auf die Patenterteilung: **14.06.2006**
(21) Anmeldenummer: 01810335.8
(22) Anmeldetag: 03.04.2001
(51) Int. Cl.: B01L 3/00, B01L 3/02

(54) **Mikropumpe zur Abgabe von kleinen Flüssigkeitstropfen**
Micropump for dispensing liquid droplets
Micro-pompe pour délivrer des gouttelettes de liquide

(30) Priorität: 07.04.2000 CH 692002000
(43) Veröffentlichungstag der Anmeldung: 10.10.2001
(73) Patentinhaber: Tecan Trading AG, 8708 Männedorf (CH)
(72) Erfinder: Ingenhoven, Nikolaus, 8719 Uerikon (CH); Fornito, Stefano, 8614 Bertschikon (CH); Schmid, Noa, 9514 Wuppenau (CH); Hälg, Werner, 8708 Männedorf (CH)
(74) Vertreter: OK pat AG

(56) Entgegenhaltungen:
- EP-A- 0 725 267
- EP-A- 0 984 285
- DE-A- 3 029 718

## Beschreibung

### Technisches Gebiet

Die Erfindung betrifft eine Mikropumpe, wie sie vor allem zur Abgabe von kleinen Flüssigkeitstropfen aus der Luft in Laborgeräten für chemische, insbesondere biochemische und medizinische Untersuchungen eingesetzt werden.

### Stand der Technik

Bei bekannten gattungsgemässen Mikropumpen, mit denen Flüssigkeitstropfen aus der Luft abgegeben werden, liegt die Ausstossöffnung gewöhnlich exzentrisch in einer grösseren, im wesentlichen ebenen, meist rechteckigen Fläche. In EP-A-0 725 267 wurde zwar vorgeschlagen, die Spitze einer Mikropumpe pyramidenförmig auszubilden, doch werden keine näheren Angaben gemacht und es ist anzunehmen, dass sie tatsächlich einen Pyramidenstumpf bilden soll, in dessen verhältnismässig grosser ebener Frontfläche exzentrisch die Ausstossöffnung liegt. Eine gattungsgemäße Mikropumpe wird in WO-A-9826179 beschrieben.

Es hat sich jedoch gezeigt, dass eine grössere die Ausstossöffnung umgebende Frontfläche sich ungünstig auf die Zuverlässigkeit des Ausstosses der Flüssigkeitstropfen sowie die Reproduzierbarkeit der Tropfengrösse auswirkt. Dies liegt vor allem daran, dass sich an der Frontfläche leicht eine um die Ausstossöffnung konzentrierte Flüssigkeitsansammlung bildet, die den Tropfenausstoss in unkontrollierbarer Weise beeinflusst, u. U. sogar verhindert.

### Darstellung der Erfindung

Der Erfindung liegt die Aufgabe zu Grunde, eine gattungsgemässe Mikropumpe anzugeben, bei welcher die Ausstossung von Flüssigkeitstropfen mit grosser Zuverlässigkeit und geringer Schwankung der Tropfengrösse erfolgt.

Diese Aufgabe wird durch die Merkmale des Anspruchs 1 gelöst. Die Entstehung einer Flüssigkeitsansammlung in der Umgebung der Ausstossöffnung wird in der Regel vermieden. Aber auch im Fall, dass sich trotzdem - z. B. wegen einer nicht ganz präzisen Regelung des Flüssigkeitsnachschubs - eine solche Flüssigkeitsansammlung bildet, bleibt sie geringfügig und erreicht kein störendes Ausmass, da die Flüssigkeit seitlich abfliesst. Die Ausstossung von Flüssigkeitstropfen erfolgt somit ungestört und die Tropfengrösse hängt nur von den Eigenschaften der Flüssigkeit, von der Grösse der Ausstossöffnung und von der Ansteuerung des Aktuators ab.

### Kurze Beschreibung der Zeichnungen

Im folgenden wird die Erfindung anhand von Figuren, welche lediglich ein Ausführungsbeispiel darstellen, näher erläutert. Es zeigen
- Fig. 1: eine Seitenansicht einer erfindungsgemässen Mikropumpe in einer Halterung,
- Fig. 2a: vergrössert einen Längsschnitt durch den vorderen Teil der Mikropumpe von Fig. 1,
- Fig. 2b: eine Unteransicht des in Fig. 2a dargestellten Teils der Mikropumpe,
- Fig. 3a: nochmals vergrössert eine Seitenansicht der Spitze des in Fig. 2a,b dargestellten vorderen Teils der Mikropumpe,
- Fig. 3b: eine Unteransicht der in Fig. 3a dargestellten Spitze und
- Fig. 4: nochmals vergrössert eine Frontansicht der in Fig. 3a,b dargestellten Spitze.

### Wege zur Ausführung der Erfindung

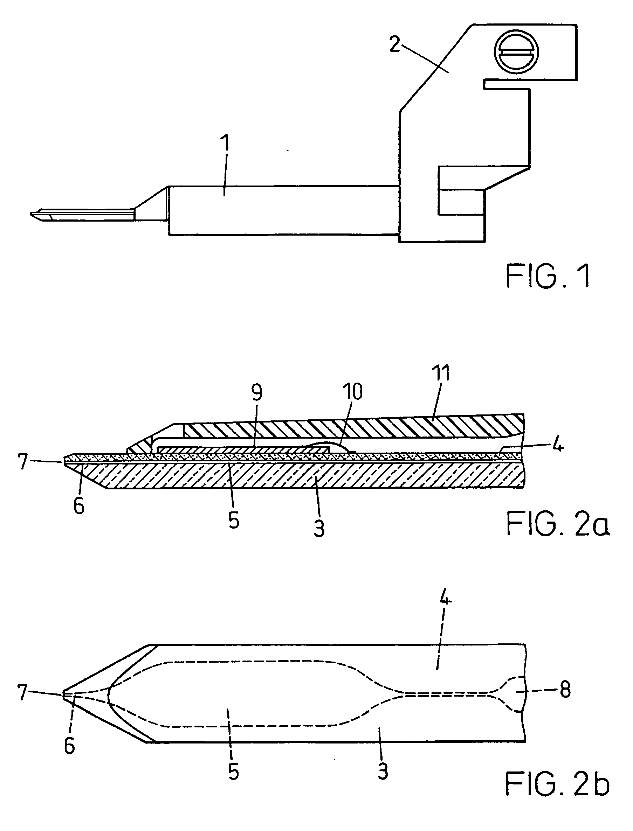

Fig. 1 zeigt eine erfindungsgemässe Mikropumpe 1 in einer Halterung 2, welche z. B. in eine dreiachsig bewegbare Fassung einer Mikropipettiervorrichtung eingehängt werden kann. Die Mikropumpe 1 weist (Fig. 2a,b) eine Grundplatte 3 aus Glas, z. B. Borglas auf mit einer ebenen Oberseite, welche mit der Unterseite einer dünneren Deckplatte 4 aus Silizium verbunden ist. Aus der im übrigen gleichfalls ebenen Unterseite der Deckplatte 4 ist eine Pumpkammer 5 von ca. 50 µm Höhe herausgeätzt sowie ein vorn an dieselbe anschliessender gerader Ausstosskanal 6 gleicher Höhe, der sich zu einem Abschnitt konstanten Querschnitts verengt, welcher in einer Ausstossöffnung 7 endet. Am gegenüberliegenden Ende der Pumpkammer 5 schliesst über eine Engstelle ein Zuflusskanal 8 an, welcher in einer Zuflussöffnung (nicht dargestellt) endet, die mit einem Vorratsgefäss oder einer Pumpe, z. B. einem Dilutor verbunden sein kann. An einem der Pumpkammer 5 gegenüberliegenden Teil der Oberseite der Deckplatte 4 ist ein plattenförmiges Piezoelement 9 als Aktuator angebracht, das über Zuleitungen 10 angesteuert wird. Das Piezoelement 9 und der grösste Teil der Deckplatte 4 sind durch eine Abdeckung 11 geschützt. Sie kann, wie in Fig. 2a dargestellt, als Kunststoffdeckel ausgebildet sein oder aus einer Vergussmasse - vorzugsweise einem Kunststoff - bestehen, mit welcher das Piezoelement 9 und die Zuleitungen 10 vergossen sind.

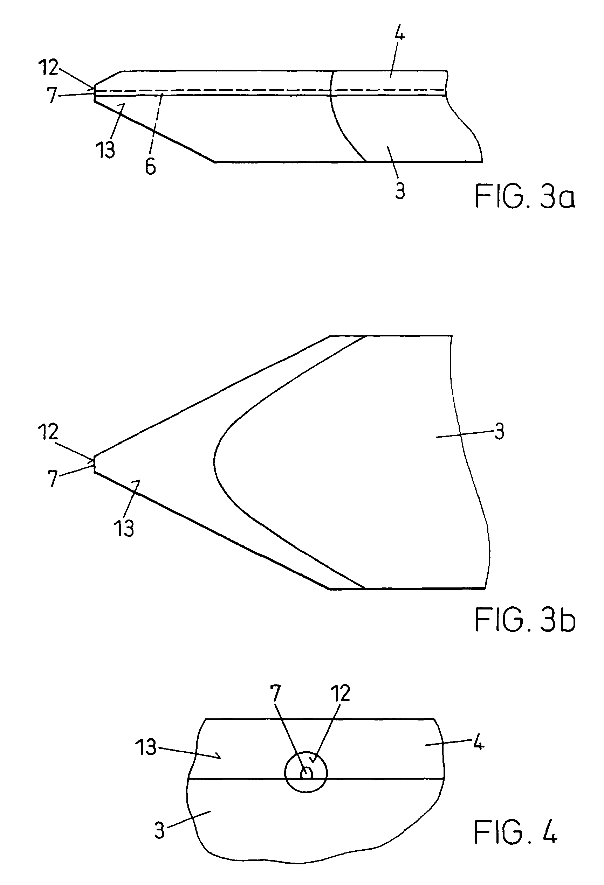

Die Ausstossöffnung 7 ist (Fig. 3a,b, 4) ungefähr kreisförmig. Sie ist konzentrisch von einer ebenen kreisringförmigen Frontfläche 12 umgeben. An der die Frontfläche 12 aussen begrenzenden Kante schliesst an dieselbe ringsum eine rotationssymmetrische, insbesondere kegelstumpfmantelförmige, mit der Frontfläche 12 konzentrische Seitenfläche 13 an. Der Durchmesser der Ausstossöffnung 7 beträgt etwa 50 µm, derjenige der Frontfläche 12 etwa 150 µm. Der Flächeninhalt der Frontfläche 12 beträgt also etwa das 8-fache der Fläche der Ausstossöffnung 7. Es hat sich gezeigt, dass sich bei solchen Verhältnissen keine störenden Flüssigkeitsansammlungen auf der Frontfläche 12 bilden können.

Je kleiner das Flächenverhältnis ist, desto günstiger sind grundsätzlich die Eigenschaften der Mikropumpe hinsichtlich der Vermeidung störender Flüssigkeitsansammlungen im Bereich der Ausstossöffnung. Die untere Grenze für den Durchmesser der Frontfläche ist dabei durch Herstellungstoleranzen und Anforderungen an die Robustheit gegeben. Ohne allzu grossen Aufwand herstellbar sind Mikropumpen mit Frontflächen von etwa 200 µm bis 250 µm Durchmesser, was, wenn man von einem Durchmesser der Ausstossöffnung von ca. 50 µm ausgeht, auf Flächenverhältnisse von etwa 1:15 bis 1:25 führt. Auch ein Durchmesser der Frontfläche von 150 µm wie oben angegeben ist noch gut realisierbar. Unter den meisten Umständen liegen die Eigenschaften der Mikropumpe auch bei sehr viel grösseren Flächenverhältnissen als oben angegeben noch durchaus im Rahmen des Zulässigen. Die Grenze ist natürlich abhängig von anderen Parametern sowie den Anforderungen an die Funktion der Mikropumpe.

Der Winkel zwischen der Achse und einer Mantellinie der Seitenfläche 13 liegt bei ca. 30°. Er sollte möglichst nicht grösser als 60° sein, damit nötigenfalls ein Abfliessen von Flüssigkeit von der Frontfläche über deren Aussenrand auf die Seitenfläche in ausreichendem Ausmass erfolgt. Es hat sich gezeigt, dass die beschriebene Ausbildung der Seitenfläche auch geeignet ist, die Bildung von Flüssigkeitsansammlungen an der Frontfläche beim Austauchen der Spitze der Mikropumpe aus einem Flüssigkeitsspiegel zu vermeiden, wenn dieselbe z. B. als Pipettenspitze verwendet und daher zum Aufziehen von Flüssigkeit etwa mittels einer nachgeschalteten Pumpe gelegentlich auch eingetaucht wird.

Günstig für die Vermeidung von Flüssigkeitsansammlungen im Bereich der Ausstossöffnung 7 ist auch eine geringe Rauhigkeit der Oberfläche an der Frontfläche 12 und mindestens einem angrenzenden Bereich der Seitenfläche 13, die möglichst N4 oder geringer sein sollte. Sie kann durch eine geeignete Beschichtung vermindert werden, welche auch durch ihre chemische Zusammensetzung die Adhäsion der Flüssigkeit verringern kann. So kann sie je nach den Eigenschaften der Flüssigkeit hydrophob oder hydrophil sein. Bei Mikropumpen zur Abgabe wässriger Flüssigkeiten hat sich z. B. eine hydrophobe Plasmapolymerbeschichtung als günstig erwiesen.

Die Herstellung der erfindungsgemässen Mikropumpe erfolgt weitgehend in an sich bekannter Weise, indem eine rechteckige Siliziumplatte, aus welcher die Pumpkammer, der Ausstosskanal und der Zuflusskanal herausgeätzt wurden, durch anodisches Bonden mit einer ebenfalls rechteckigen Glasplatte verbunden wird. Anschliessend wird durch Schleifen mittels einer Diamantschleifscheibe die Seitenfläche 13 angelegt und somit die Spitze der Mikropumpe fertiggestellt. Dann werden das Piezoelement 9 und die elektrischen Zuleitungen 10 zu demselben sowie die Abdeckung 11 angebracht. Schliesslich werden die Frontfläche 12 und mindestens z. T. auch die Seitenfläche 13 beschichtet.

Die Abgabe von Flüssigkeitstropfen mittels der Mikropumpe erfolgt wie bei bekannten gattungsgemässen Mikropumpen so, dass die Deckplatte 4 mittels des Piezoelements 9 schlagartig nach unten durchgebogen wird. Die Verringerung des Volumens der Pumpkammer 5 verursacht eine Druckwelle, die durch den Ausstosskanal 6 zur Austrittsöffnung 7 läuft und die Ausstossung eines Flüssigkeitstropfens aus derselben bewirkt.

### Bezugszeichenliste

- 1: Mikropumpe
- 2: Halterung
- 3: Grundplatte
- 4: Deckplatte
- 5: Pumpkammer
- 6: Ausstosskanal
- 7: Ausstossöffnung
- 8: Zuflusskanal
- 9: Piezoelement
- 10: Zuleitungen
- 11: Abdeckung
- 12: Frontfläche
- 13: Seitenfläche

## Patentansprüche

1. Mikropumpe (1) mit einer Pumpkammer (5), deren Volumen mittels eines Aktuators verkleinert werden kann, mit einer Pipettenspitze und einem Ausstosskanal (6), welcher von der Pumpkammer (5) zu einer von einer Frontfläche (12) umgebenen Ausstossöffnung (7) führt, wobei die Frontfläche (12) der Pipettenspitze eine jeweils durch eine Kante von einer sie umgebenden Seitenfläche (13) abgegrenzte, im wesentlichen ebene Fläche bildet, wobei die Mikropumpe eine Grundplatte (3) mit einer ebenen Oberseite und eine mit derselben verbundene Deckplatte (4) umfasst, welche zusammen die Pumpkammer (5), den Ausstosskanal (6) und die Ausstossöffnung (7) sowie die Pipettenspitze bilden, **dadurch gekennzeichnet, dass** der Aussenrand der Frontfläche (12) im wesentlichen kreisförmig ausgebildet ist und der Flächeninhalt der Frontfläche (12) höchstens das 25- fache der Fläche der Ausstossöffnung beträgt.

2. Mikropumpe nach Anspruch 1, **dadurch gekennzeichnet, dass** der Flächeninhalt der Frontfläche (12) höchstens das 15-fache der Fläche der Ausstossöffnung (7) beträgt.

3. Mikropumpe nach Anspruch 1 oder 2, **dadurch gekennzeichnet, dass** der Durchmesser der Frontfläche (12) höchstens 250 µm und insbesondere höchstens 200 µm beträgt.

4. Mikropumpe nach einem der Ansprüche 1 bis 3, **dadurch gekennzeichnet, dass** die die Frontfläche (12) umgebende Seitenfläche (13) rotationssymmetrisch, vorzugsweise kegelstumpfmantelförmig ist.

5. Mikropumpe nach einem der Ansprüche 1 bis 4, **dadurch gekennzeichnet, dass** die Ausstossöffnung (7) im wesentlichen im Zentrum der Frontfläche (12) liegt.

6. Mikropumpe nach einem der Ansprüche 1 bis 5, **dadurch gekennzeichnet, dass** die Frontfläche (12) eine Rauhigkeit von höchstens N4 aufweist und vorzugsweise desgleichen mindestens ein unmittelbar an sie anschliessender Randbereich der Seitenfläche (13).

7. Mikropumpe nach einem der Ansprüche 1 bis 6, **dadurch gekennzeichnet, dass** die Frontfläche (12) hydrophob oder hydrophil beschichtet ist und vorzugsweise desgleichen mindestens ein unmittelbar an sie anschliessender Randbereich der Seitenfläche (13).

8. Mikropumpe nach einem der Ansprüche 1 bis 7, **dadurch gekennzeichnet, dass** der Aktuator ein plattenförmiges Piezoelement (9) ist, welches der Pumpkammer (5) gegenüber an der Aussenseite der Deckplatte (4) angeordnet ist.

9. Mikropumpe nach einem der Ansprüche 1 bis 8, **dadurch gekennzeichnet, dass** die aus Silizium gebildete Deckplatte (4), dünner als die aus Glas gebildete Grundplatte (3) und auf ihrer der Pumpkammer (5) gegenüberliegenden Oberseite eben ausgebildet ist.

10. Mikropumpe nach einem der Ansprüche 1 bis 9, **dadurch gekennzeichnet, dass** die Pumpkammer (5), der Ausstosskanal (6) und der Zuflusskanal (8) die gleiche Höhe aufweisen und aus der sonst flachen Unterseite der Deckplatte (4) herausgeätzt sind.

## Claims

1. Micropump (1) with a pump chamber (5) the volume of which can be reduced by means of an actuator, with a pipette tip and an ejection channel (6) leading from the pump chamber (5) to an ejection orifice (7) surrounded by a front surface (12), the front surface (12) of the pipette tip forming an essentially flat surface limited by an edge of a lateral surface (13) surrounding it, the micropump comprising a base plate (3) with a flat upper surface and a cover plate (4) bonded to this, so that together they form the pump chamber (5), the ejection channel (6), the ejection orifice (7) and the pipette tip, **characterized in that** the outer edge of the front surface (12) is essentially ring-shaped and the surface area of the front surface (12) is at most 25 times the area of the ejection orifice.

2. Micropump according to Claim 1, **characterized in that** the surface area of the front surface (12) is at most 15 times the area of the ejection orifice (7).

3. Micropump according to Claim 1 or 2, **characterized in that** the diameter of the front surface (12) is at most 250 µm and especially at most 200 µm.

4. Micropump according to one of Claims 1 to 3, **characterized in that** the lateral surface (13) surrounding the front surface (12) is rotationally symmetrical, and preferably in the shape of a truncated pyramid.

5. Micropump according to one of Claims 1 to 4, **characterized in that** the ejection orifice (7) is positioned essentially in the centre of the front surface (12).

6. Micropump according to one of Claims 1 to 5, **characterized in that** the front surface (12) displays roughness of at most N4 as, preferably, does at least a contiguous portion of the adjacent edge zone of the lateral surface (13).

7. Micropump according to one of Claims 1 to 6, **characterized in that** the front surface (12) is coated with a hydrophobic or hydrophilic substance, as, preferably, is at least a contiguous portion of the adjacent edge zone of the lateral surface (13).

8. Micropump according to one of Claims 1 to 7, **characterized in that** the actuator is a flat piezo-element (9) arranged on the outer side of the cover plate (4) in a position opposite the pump chamber (5).

9. Micropump according to one of Claims 1 to 8, **characterized in that** the silicon cover plate (4) is thinner than the glass base plate (3) and is made flat on its upper side opposite the pump chamber (5).

10. Micropump according to one of Claims 1 to 9, **characterized in that** the pump chamber (5), the ejection channel (6) and the feed channel (8) all display the same height and are etched out of the otherwise flat underside of the cover plate (4).

## Revendications

1. Micro-pompe (1) comportant une chambre de pompage (5) dont le volume peut être réduit au moyen d'un actionneur, comportant une pointe de pipette et un canal d'expulsion (6) qui mène de la chambre de pompage (5) à une ouverture d'expulsion (7) entourée d'une surface frontale (12), la surface frontale (12) de la pointe de pipette formant une surface essentiellement plane délimitée par une arête d'une surface latérale (13) l'entourant, la micro-pompe (3) comportant une plaque de base (3) ayant une face supérieure plane et une plaque de recouvrement (4) reliée à celle-ci, et qui forment ensemble la chambre de pompage (5), le canal d'expulsion (6) et l'ouverture d'expulsion (7), ainsi que la pointe de pipette, **caractérisée en ce que** le bord externe de la surface frontale (12) est essentiellement exécuté en forme de cercle et **en ce que** l'aire de surface de la surface frontale (12) correspond au plus à 25 fois la surface de l'ouverture d'expulsion.

2. Micro-pompe selon la revendication 1, **caractérisée en ce que** l'aire de surface de la surface frontale (12) est au plus égale à 15 fois la surface de l'ouverture d'expulsion (7).

3. Micro-pompe selon la revendication 1 ou 2, **caractérisée en ce que** le diamètre de la surface frontale (12) est au plus de 250 µm et en particulier au plus de 200 µm.

4. Micro-pompe selon l'une des revendications 1 à 3, **caractérisée en ce que** la surface latérale (13) entourant la surface frontale (12) est à symétrie de rotation, de préférence en forme de génératrice de cône tronqué.

5. Micro-pompe selon l'une des revendications 1 à 4, **caractérisée en ce que** l'ouverture d'expulsion (7) repose essentiellement au centre de la surface frontale (12).

6. Micro-pompe selon l'une des revendications 1 à 5, **caractérisée en ce que** la surface frontale (12) présente une rugosité au plus égale à N4, comme de préférence aussi au moins une zone de bordure de la surface latérale (13) qui y est immédiatement rattachée.

7. Micro-pompe selon l'une des revendications 1 à 6, **caractérisée en ce que** la surface frontale (12) est revêtue de façon hydrophobe ou hydrophile, comme de préférence aussi au moins une zone de bordure de la surface latérale (13) qui y est immédiatement rattachée.

8. Micro-pompe selon l'une des revendications 1 à 7, **caractérisée en ce que** l'actionneur est un élément piézoélectrique (9) en forme de plaque, qui est disposé à l'opposé de la chambre de pompage (5) au niveau de la face externe de la plaque de recouvrement (4).

9. Micro-pompe selon l'une des revendications 1 à 8, **caractérisée en ce que** la plaque de recouvrement (4) formée en silicium et plus mince que la plaque de base (3) formée de verre et est exécutée de façon plane sur sa face supérieure opposée à la chambre de pompage (5).

10. Micro-pompe selon l'une des revendications 1 à 9, **caractérisée en ce que** la chambre de pompage (5), le canal d'expulsion (6) et le canal d'alimentation (8) présentent la même hauteur et sont gravés à partir de la face inférieure par ailleurs plane de la plaque de recouvrement (4).
